# EUROPÄISCHE PATENTSCHRIFT

(11) **EP 3 891 545 B1**
(45) Veröffentlichungstag und Bekanntmachung des Hinweises auf die Patenterteilung: **28.01.2026**
(21) Anmeldenummer: 19817225.6
(22) Anmeldetag: 04.12.2019
(51) Int. Cl.: G02B 21/26, G02B 21/34, G02B 21/36

(54) **VERFAHREN ZUR AUTOMATISCHEN POSITIONSERMITTLUNG AUF EINER PROBENANORDNUNG UND ENTSPRECHENDES MIKROSKOP**
METHOD FOR AUTOMATICALLY DETERMINING A POSITION ON A SAMPLE ARRANGEMENT AND CORRESPONDING MICROSCOPE
PROCÉDÉ POUR DÉTERMINER AUTOMATIQUEMENT LA POSITION SUR UN AGENCEMENT D'ÉCHANTILLONS ET MICROSCOPE CORRESPONDANT

(30) Priorität: 07.12.2018 DE 102018131427
(43) Veröffentlichungstag der Anmeldung: 13.10.2021
(73) Patentinhaber: Leica Microsystems CMS GmbH, 35578 Wetzlar (DE)
(72) Erfinder: HOFMANN, Tobias, 35606 Solms (DE); STEY, Christof, 35578 Wetzlar (DE); SCHACHT, Volker, 35043 Marburg (DE)
(74) Vertreter: Schaumburg und Partner Patentanwälte mbB
(86) Internationale Anmeldenummer: PCT/EP2019/083725
(87) Internationale Veröffentlichungsnummer: WO 2020/115160

(56) Entgegenhaltungen:
- EP-A1- 3 101 385
- EP-A2- 2 642 326
- EP-A2- 2 642 326
- WO-A1-2011/131311
- DE-A1- 102010 030 430
- DE-A1- 102010 030 430
- US-A1- 2012 097 835
- US-A1- 2012 097 835
- US-A1- 2017 276 924
- US-A1- 2017 276 924

## Beschreibung

Die vorliegende Erfindung betrifft ein Verfahren zur automatischen Ermittlung von Positionen auf einer Probenanordnung im Objektraum eines Mikroskops sowie ein entsprechendes Mikroskop. Insbesondere betrifft die Erfindung die automatische Erkennung der räumlichen Position eines Probenträgers bei insbesondere verstellbaren Halteeinrichtungen in der Mikroskopie.

### Stand der Technik

Zur Untersuchung insbesondere biologischer Proben sind aufrechte sowie inverse Mikroskope aus dem Stand der Technik bekannt. Diese weisen in der Regel einen in einer Ebene senkrecht zur optischen Achse des Mikroskops, wie sie durch das Mikroskopobjektiv definiert ist, verfahrbaren x-y-Mikroskoptisch auf. Dieser verfügt über ein Koordinatensystem, über das jede beliebige Position angefahren werden kann. Auf diese Weise ist es möglich, bestimmte Punkte anzufahren, an denen eine Probenuntersuchung erfolgen soll, und/oder bestimmte Bereiche zu definieren, innerhalb derer die Probe abgefahren bzw. gescannt werden soll. Die entsprechenden Punkte bzw. Bereiche werden in der Regel von einem Benutzer eingegeben, wobei hierzu meist eine visuelle Kontrolle durch Sichtung von mikroskopischen Bildern erfolgt. Bei der Verwendung von bekannten Halteeinrichtungen (Haltern), bei denen der Objektträger (Englisch "slide") bzw. allgemeiner der Probenträger eine feste Position einnimmt, kann das Anfahren einer Position und/oder das Scannen eines Bereichs auch automatisch erfolgen.

Bei der Verwendung von Universal-Haltern als Halteeinrichtung mit einem verstellbaren Rahmen zur Aufnahme verschiedener Probenträger, speziell eines Slides, einer Petrischale oder Multiwell-Platte o.ä., kann eine definierte Position auf dem Probenträger nicht angefahren werden, da aufgrund der Verstellbarkeit des Halters kein fester Bezug mehr zwischen dem Mikroskoptisch-Koordinatensystem und der Position des Probenträgers besteht. Aufgrund des fehlenden Bezugs muss der Benutzer visuell den Probenträger an die gewünschte Position verfahren. Ein solcher manueller Eingriff des Benutzers ist meist zeitraubend und kann sich umständlich gestalten. Bei geschlossenen Systemen, bei denen kein oder nur ein eingeschränkter visueller Kontakt des Benutzers zum Probenträger besteht, ist eine solche manuelle Positionierung noch umständlicher und fehleranfällig, wenn nicht gar unmöglich.

Die US 2017/0276924 A1 offenbart Bildgebungssysteme mit einem zusätzlichen Bilddetektor zur Probenlokalisation. Das Bildgebungssystem ist dazu eingerichtet, ein Bild der Probe von einem ersten Bildgebungsdetektor zu empfangen, der zur Bestimmung der Position von Probenabschnitten eingesetzt wird. Dann wird eine physische Lokalisierung eines Kontrastbereichs innerhalb des Probenbildes vorgenommen. Dazu wird das Bild entlang eines Ausschnitts mit einem Bildverarbeitungsalgorithmus ausgewertet, um Kontrastveränderungen zu detektieren. Anhand der vorgenommenen physischen Lokalisierung wird dann ein Antrieb entsprechend gesteuert, dass zumindest ein Teil der Probe in das Gesichtsfeld eines zweiten Bildgebungsdetektors positioniert wird.

Aus der US 2012/0097835 A1 ist eine triangulierende Autofokuseinrichtung bekannt. Diese wird beispielsweise in einer Mikroskopanordnung eingesetzt, um eine Probe während der mikroskopischen Untersuchung im Fokus zu halten. Die vorgeschlagene Autofokuseinrichtung kann nicht nur Veränderungen der Objektebene in z-Richtung, also in Richtung der optischen Achse, detektieren, sondern auch Kippungen. Die DE 10 2010 030 430 A1 betrifft eine verbesserte triangulierende Autofokuseinrichtung.

Die EP 2 642 326 A2 schlägt zur Kalibrierung eines Mikroskop-Scanningsystems die Bereitstellung von Objektträgerrahmen mit einer Objektträgeraufnahme und einem Objektträger mit einer Kalibrierungsmarkierung vor.

Die WO 2011/131311 A1 beschreibt eine Topographiemessung (d.h. Bestimmung von Höhen) einer Probe. EP 3 101 385 A1 beschreibt ein ähnliches Vorgehen.

Vor diesem Hintergrund ist es wünschenswert, Positionen auf einer Probenanordnung, beispielsweise einer Halteeinrichtung und/oder einem Probenträger, automatisch zu ermitteln, um ausgehend von den ermittelten Positionen eine Positionierung vornehmen und/oder Probenbereiche für die nachfolgende mikroskopische Untersuchung festlegen zu können.

### Offenbarung der Erfindung

Die vorliegende Erfindung schlägt ein Verfahren zur automatischen Ermittlung mehrerer Positionen auf einer Probenanordnung im Objektraum eines Mikroskops sowie ein entsprechendes Mikroskop gemäß den unabhängigen Patentansprüchen vor. Vorteilhafte Ausgestaltungen ergeben sich aus den jeweiligen Unteransprüchen und der nachfolgenden Beschreibung.

Das erfindungsgemäße Verfahren dient zur automatischen Ermittlung von Positionen auf und/oder in einer Probenanordnung im Objektraum eines Mikroskops, wobei das Mikroskop ein Mikroskopobjektiv, das eine optische Achse definiert, umfasst. Bei den zu ermittelnden Positionen handelt es sich insbesondere um Begrenzungspunkte von die Probenanordnung bildenden Elementen, also beispielsweise Randpunkte, Anfangs- bzw. Endpunkte eines Elements bezogen auf eine bestimmte Richtung. Zur Ermittlung solcher Positionen wird ein Messstrahl von einer Messstrahleinrichtung des Mikroskops erzeugt und auf die Probenanordnung gerichtet, und ein von der Probenanordnung reflektierter Messstrahl wird von einem Detektor, der ein Ausgangssignal erzeugt, erfasst. Die Probenanordnung wird in zumindest einer Richtung senkrecht zur optischen Achse verschoben. In Abhängigkeit von dieser Verschiebung werden die Positionen auf der Probenanordnung mittels während der Verschiebung in die zumindest eine Richtung erzeugten Ausgangssignalen des Detektors ermittelt.

Das von dem Detektor erzeugte Ausgangssignal ist insbesondere zumindest auch hinsichtlich einer Höhenänderung in der Probenanordnung sensitiv (im Folgenden auch "höhensensitives Detektorsignal" genannt). Weisen folglich bestimmte Elemente der Probenanordnung unterschiedliche Höhe, also Ausdehnungen in z-Richtung parallel zur optischen Achse, auf, so ändert sich das Detektorsignal, wenn während der Verschiebung der Probenanordnung der Messstrahl an diesen Elementen unterschiedlicher Höhe reflektiert wird. Alternativ oder zusätzlich kann das Detektorsignal hinsichtlich einer Materialänderung in der Probenanordnung sensitiv sein (im Folgenden auch "materialsensitives Detektorsignal" genannt). In diesem Fall ändert sich das Detektorsignal, wenn während der Verschiebung der Probenanordnung der Messstrahl an Elementen unterschiedlichen Materials reflektiert wird. Dies ist insbesondere dann vorteilhaft, wenn sich innerhalb der Probenanordnung zwar nicht die Ausdehnung in z-Richtung, aber der Brechungsindex ändert, beispielsweise auch bei Industrieproben, die in Silikon o.ä. eingebettet sind. In solchen Fällen ist es möglich, Probenbereiche mit gleichem Brechungsindex bzw. gleicher Reflektivität zu detektieren. Häufig ist das Detektorsignal sowohl höhen- als auch materialsensitiv, so dass Änderungen hinsichtlich der Ausdehnung in z-Richtung als auch hinsichtlich des Brechungsindex detektiert werden können.

Mit Vorteil werden die von dem Detektor erzeugten Ausgangssignale hinsichtlich vorhandener Signalflanken ausgewertet, um die mehreren Positionen auf der Probenanordnung zu bestimmen. Signalflanken treten beispielsweise bei den erwähnten höhen- und/oder materialsensitiven Detektorsignalen in der Regel immer dann auf, wenn sich eine Eingangsgröße, wie Höhe bzw. Material auf der Probenanordnung in Verschieberichtung ändert. Einem bestimmten Punkt auf einer solchen Signalflanke kann dann ein entsprechender Ort in Verschieberichtung und somit eine entsprechende Position auf der Probenanordnung zugeordnet werden.

Es ist vorteilhaft, wenn die Messstrahleinrichtung einen gerichteten Messstrahl erzeugt und diesen über ein Umlenkelement in das Mikroskop parallel zur optischen Achse derart einkoppelt, dass der Messstrahl über das Mikroskopobjektiv auf die Probenanordnung fällt. Nach Reflexion an der Probenanordnung fällt vorzugsweise ein reflektierter Messstrahl durch das Mikroskopobjektiv auf ein Umlenkelement und von dort auf den Detektor, wobei es sich vorzugsweise um ein und dasselbe Umlenkelement handelt.

Die erfindungsgemäß untersuchte Probenanordnung umfasst zweckmäßigerweise eines oder mehrere der folgenden Elemente: Eine Halteeinrichtung für einen Probenträger, wobei eine solche Halteeinrichtung üblicherweise als Halter oder Halterahmen bezeichnet wird, und/oder einen Probenträger, wobei es sich hierbei um einen Objektträger (Englisch "slide"), einen Glasträger, eine Petrischale (Englisch "Petri dish"), ein Zellkultiviersystem (Englisch "cell cultivation system"), ein Kammer-Objektträgersystem (Englisch "chambered coverglass system"), eine Multiwell-Platte (Englisch "multiwell plate") handeln kann, und/oder ein Deckglas, einschließlich ein Kammer-Deckglassystem (Englisch "chambered coverglass system"), und/oder eine Probe. Bei der Probenanordnung kann es sich also beispielsweise um einen Halter bzw. Halterahmen mit eingesetztem Objektträger (Slide) handeln, wobei auf dem Objektträger eine dünne biologische Probe aufgebracht ist, die ihrerseits unter einem Deckglas liegt. Selbstverständlich können auch einzelne der genannten Elemente fehlen. Bei einer solchen Probenanordnung können mittels des erfindungsgemäßen Verfahrens bei Verschieben der Probenanordnung in eine Richtung insbesondere die jeweiligen Begrenzungspunkte dieser Elemente, also die Anfangs- und Endpunkte des Halters und/oder des Objektträgers und/oder des Deckglases und/oder gegebenenfalls der Probe in dieser Richtung bestimmt werden. In weiter unten erläuterten optionalen Ausgestaltungen ist es auch möglich, die Begrenzungspunkte einer Probe und/oder Probenbereiche auf zuverlässige Weise zu ermitteln.

Die Erfindung wird unter Verwendung einer triangulierenden Autofokuseinrichtung umgesetzt. Eine solche triangulierende Autofokuseinrichtung erzeugt einen Autofokus-Messstrahl, der üblicherweise über das Mikroskopobjektiv auf einen Probenbereich gerichtet wird, wobei ein dort reflektierter Messstrahl wiederum über das Mikroskopobjektiv einem Autofokus-Detektor zugeführt wird. Dieser Detektor erzeugt ein Ausgangssignal, das sich bei Veränderung des Abstands zwischen Mikroskopobjektiv und Probenbereich ändert, somit also höhensensitiv im oben definierten Sinne ist. Eine solche Autofokuseinrichtung wird üblicherweise zum Einstellen und/oder Halten des Fokus vor bzw. während einer Probenuntersuchung mit einem Mikroskop verwendet.

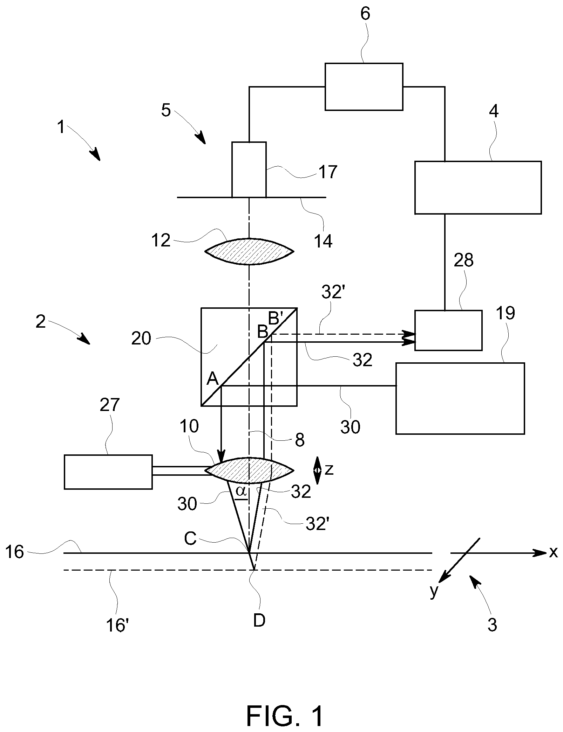

Zur besseren Verständlichkeit soll die Erfindung nachfolgend ohne Beschränkung der Allgemeinheit im Zusammenhang mit einer solchen triangulierenden Autofokuseinrichtung näher erläutert werden. Eine solche triangulierende Autofokuseinrichtung ist an sich beispielsweise aus der US 5 136 149 B1 bekannt und soll anhand der beigefügten Figur 1 näher erläutert werden. Es sei angemerkt, dass Figur 1 lediglich das Grundprinzip einer solchen Autofokuseinrichtung 2 beschreibt. Eine vorteilhafte Weiterentwicklung ist beispielsweise aus der deutschen Patentschrift, DE 10 2010 030 430 B4, der Anmelderin bekannt. Bezüglich Einzelheiten, Funktionsweisen und Aufbau sei ausdrücklich auf die genannten Druckschriften verwiesen. Wie in Figur 1 gezeigt, ist eine Autofokussierungslichtquelle 19 derart angeordnet, dass nach Umlenkung des Autofokus-Messstrahls 30 und Durchtritt des selbigen durch das Mikroskopobjektiv 10 die Objekteebene 16 schräg bzw. schief getroffen wird. Ein positionssensitiver Autofokus-Detektor 28 detektiert die seitliche Versetzung eines einfallenden Strahls 32, wie weiter unten beschrieben wird. Die Autofokuseinrichtung umfasst weiterhin einen Motor 27 zum Bewegen des Objektivs 10 in Richtung optischer Achse 8 (z-Richtung). Alternativ oder zusätzlich kann die Objektebene 16 auch in Richtung der optischen Achse 8 verschoben werden.

Bei der Autofokuseinrichtung 2 gemäß Figur 1 wird der Messstrahl 30 durch den Strahlteiler 20 an einem Punkt A in Richtung Objektiv gelenkt, durch das der abgelenkte Strahl 30 unter einem Winkel α schräg bzw. schief im Punkt C auf die Objektebene 16 trifft. Der reflektierte Messstrahl 32 gelangt über das Objektiv 10 wiederum zu dem Strahlteiler 20 und wird dort in einem Punkt B in den Detektor 28 gelenkt. Dessen Ausgangssignal hängt von dem Ort, an welchem der Strahl 32 auftrifft, ab, sodass der Ort dadurch bestimmt ist.

Im Falle einer Defokussierung, das heißt im vorliegenden Beispiel gemäß Figur 1 einer Verschiebung der Objektebene 16 in die Ebene 16' (oder einer Verlagerung eines abzubildenden Punktes aus der Ebene 16 in die Ebene 16'), wird der Messstrahl 30 erst am Reflexionspunkt D reflektiert, der gegenüber dem Punkt C nicht nur in Richtung der optischen Achse 8, sondern auch lateral bzw. seitlich hierzu verschoben ist. Wie aus Figur 1 ersichtlich, erreicht der entsprechende reflektierte Strahl 32', der im Strahlteiler 20 auf den Punkt B' trifft, den Detektor 28 an einem unterschiedlichen Ort und liefert somit ein verändertes Signal gegenüber der Fokuslage. Auf diese Weise kann der Grad der Defokussierung gemessen und durch den von der Autofokuseinrichtung 2 angesteuerten Motor 27, der die Objektivlinse 10 bewegt, wieder kompensiert werden. Figur 1 zeigt weiterhin eine Tubuslinse 12 sowie die Bildebene 14 des Mikroskops 1. Weitere Ausführungen zu Figur 1 befinden sich weiter unten in der Figurenbeschreibung.

Das von dem Detektor 28 der Autofokuseinrichtung erzeugte Ausgangssignal ist somit mit dem Abstand zwischen Mikroskopobjektiv 10 und Objektebene 16 korreliert und somit "höhensensitiv" im oben definierten Sinn. Dies macht sich die vorliegende Erfindung zur Ermittlung von Positionen auf einer Probenanordnung zu Nutze. Befindet sich an Stelle der in Figur 1 gezeigten Objektebene 16 im Objektraum eine Probenanordnung mit Elementen, die in z-Richtung unterschiedliche Ausdehnung/Höhe besitzen, so liefert je nach Ausdehnung/Höhe eines Elements in z-Richtung der Detektor 28 der Autofokuseinrichtung unterschiedliche Ausgangssignale. Gleichzeitig ist das Detektorsignal in der Regel auch materialsensitiv im oben definierten Sinn. Beim Verschieben der Probenanordnung in eine Richtung senkrecht zur optischen Achse 8 ergeben die erzeugten Ausgangssignale somit ein höhensensitives und in der Regel auch materialsensitives Profil, wie es durch die Autofokuseinrichtung gesehen wird. Hieraus lassen sich dann insbesondere Begrenzungs- bzw. Anfangs- und Endpunkte eines Elements der Probenanordnung in der Verschieberichtung bestimmen. Es sei betont, dass die vorliegende Erfindung eine etwaige vorhandene Autofokuseinrichtung somit nicht zu ihrem eigentlichen Zwecke einsetzt, den Fokus einzustellen oder zu halten, sondern für den gänzlich anderen Zweck, interessierende Positionen auf einer Probenanordnung zu bestimmen.

Mit anderen Worten kann eine triangulierende Autofokuseinrichtung, die im normalen Betrieb eines Mikroskops zur Einstellung und/oder zum Halten des Fokus auf eine gewünschte Objektebene verwendet wird, zur Ermittlung von Positionen auf einer Probenanordnung eingesetzt werden, indem die von dem Detektor der Autofokuseinrichtung erzeugten Ausgangssignale entsprechend ausgewertet werden. Im normalen Betrieb eines Mikroskops zeigen diese Ausgangssignale eine Abstandsänderung zwischen Mikroskopobjektiv und der gewählten Referenz-Objektebene an, sodass die Autofokuseinrichtung zur Kompensation einer solchen Abstandsänderung das Mikroskopobjektiv und/oder die Objektebene entsprechend verschiebt. Bei vorliegender Erfindung werden hingegen die erzeugten höhen- und/oder materialsensitiven Ausgangssignale des Detektors vor dem eigentlichen Mikroskopbetrieb dazu verwendet, bestimmte Positionen auf der in einer bestimmten Richtung verschobenen Probenanordnung zu ermitteln. Hierzu kann beispielsweise das erzeugte Ausgangssignal während der Verschiebung der Probenanordnung aufgenommen und ein daraus resultierendes Profil ausgewertet werden. Wie weiter unten erläutert, kann dieses Profil mit dem Höhenverlauf und/oder dem Materialverlauf der Probenanordnung in der Verschieberichtung korreliert sein.

Zur Verschiebung der Probenanordnung in zumindest eine Richtung wird vorteilhafterweise ein x-y-Mikroskoptisch des Mikroskops verwendet, der in x- und/oder y-Richtung bewegt wird. Beispielsweise kann die Probenanordnung an verschiedenen y-Koordinaten jeweils in x-Richtung verschoben werden. Auf diese Weise können mehrere in x-Richtung verlaufende Profile erzeugt werden, die zu einer zweidimensionalen Profilkarte zusammengesetzt werden können.

Den ermittelten Positionen auf der Probenanordnung können bei Verwendung eines x-y-Mikroskoptisches bestimmte x-y-Koordinaten dieses Mikroskoptisches zugeordnet werden. Auf diese Weise ist es möglich, die ermittelten Positionen zu einem späteren Zeitpunkt, insbesondere während der mikroskopischen Untersuchung, wieder anzufahren. Weiterhin ist vorgesehen, anhand der ermittelten Positionen auf der Probenanordnung einen Probenbereich zur Probenuntersuchung mit dem Mikroskop (auch "Arbeitsbereich" genannt) festzulegen. Bei einer eingangs geschilderten Probenanordnung umfassend einen Halter, einen Objektträger, eine Probe und ein Deckglas, kann als sinnvoller Arbeitsbereich zur Probenuntersuchung der Bereich des Deckglases definiert werden. Somit können in sinnvoller Weise außerhalb des Deckglases liegende Bereiche zur Probenuntersuchung ausgeklammert werden. Eine weitere Möglichkeit, den Arbeitsbereich auf die unter dem Deckglas befindliche Probe einzuschränken, wird weiter unten erläutert.

Es ist vorteilhaft, bereits die Anzahl von zur Festlegung des Probenbereichs bzw. Arbeitsbereichs zu ermittelnden Positionen bei einer bekannten Probenanordnung dadurch zu reduzieren, dass vorab gespeicherte Abmessungen bzw. Geometrien dieser bekannten Probenanordnung berücksichtigt werden. In einer Datenbank, allgemein aus einem Speicher, kann ein Benutzer beispielsweise auswählen, welche Art von Halterahmen er für die Aufnahme des Probenträgers (Glas-Slide, Petrischale oder Wellplatte) verwendet. Die Datenbank liefert die Abmessungen des Halterahmens mit den festen Achsen der Probenaufnahme. Durch diese Angaben kann die mögliche Position des Probenträgers sinnvoll eingeschränkt werden. Das erfindungsgemäße Verfahren kann dann zweckmäßigerweise nur innerhalb des bereits eingeschränkten Bereichs zur Ermittlung der Begrenzungspunkte des verwendeten Probenträgers eingesetzt werden.

In einer weiteren vorteilhaften Ausgestaltung werden mittels einer optischen Auswerteeinrichtung des Mikroskops während der Verschiebung der Probenanordnung in eine Richtung Helligkeits- und/oder Kontrastsignale erzeugt und ausgewertet. Insbesondere können hierzu mittels einer Bilderzeugungseinrichtung des Mikroskops während der Verschiebung der Probenanordnung in eine Richtung mikroskopische Bilder aufgenommen und die aufgenommenen Bilder hinsichtlich Helligkeits- und/oder Kontraständerungen ausgewertet werden. Während der Erzeugung des genannten Profils bzw. der genannten Profilkarte können parallel Helligkeits- und/oder Kontrastwerte anhand entsprechender Signale der optischen Auswerteeinrichtung oder aber insbesondere Bilder mittels einer Bilderzeugungseinrichtung des Mikroskops, also in der Regel einer Kamera, aufgenommen werden. Die Auswertung der aufgenommenen Signale bzw. Bilder hinsichtlich Helligkeits- und/oder Kontraständerungen erfolgt zweckmäßigerweise durch Vergleich der aufgenommenen Signale bzw. Bilder mit einem oder mehreren Vergleichssignalen bzw. -bildern. Liegt eine Helligkeitsänderung vor, wird diese Information zusätzlich mit dem zugehörigen Ausgangssignal des Detektors in Verschieberichtung und/oder mit den zugehörigen x-y-Koordinaten des Mikroskoptisches verknüpft. Auf diese Weise kann beispielsweise eine Helligkeitsänderung registriert werden, wenn in Verschieberichtung nach einem leeren Glas-Objektträger eine Probe auftaucht. Der zugehörige Ort dieser Helligkeitsänderung entspricht dann dem Anfangspunkt der Probe in der untersuchten Verschieberichtung. Diese Information kann zur Festlegung des Arbeitsbereichs herangezogen werden, um auf diese Weise die Probe auf dem Objektträger identifizieren und den Arbeitsbereich auf die Probe beschränken zu können. Es kann in diesem Zusammenhang auch zweckmäßig sein, über diese Auswertung Abmessungen der Probe jeweils in der genannten Verschieberichtung zu bestimmen. Bei einem zweidimensionalen Abscannen/Verschieben der Probe kann auf diese Weise die Ausdehnung der Probe in der x-y-Ebene bestimmt werden.

Besonders vorteilhaft ist es, wenn die im Laufe der Verschiebung der Probenanordnung in die zumindest eine Richtung erzeugten Ausgangssignale des Detektors der Autofokuseinrichtung zur Darstellung eines Profils (in einer Dimension) oder einer Profilkarte (in zwei Dimensionen) der Probenanordnung verwendet werden. Diese Ausgestaltung war bereits weiter oben erwähnt und wird im Einzelnen im Zusammenhang mit den Ausführungsbeispielen ausführlich erläutert.

Die Erfindung betrifft weiterhin ein Mikroskop, das zur Durchführung des erfindungsgemäßen Verfahrens eingerichtet ist.

Das erfindungsgemäße Mikroskop umfasst ein Mikroskopobjektiv, das eine optische Achse definiert, eine Messstrahleinrichtung zur Erzeugung eines auf eine Probenanordnung gerichteten Messstrahls und einen Detektor zur Erfassung eines von der Probenanordnung reflektierten Messstrahls, wobei der Detektor ein Ausgangssignal erzeugt, weiterhin eine Verschiebeeinrichtung zur Verschiebung der Probenanordnung in zumindest eine Richtung senkrecht zur optischen Achse und weiterhin eine Bestimmungseinrichtung zur automatischen Ermittlung mehrerer Positionen auf der Probenanordnung. Hierbei ist die Bestimmungseinrichtung derart ausgebildet, dass die Positionen auf der Probenanordnung mittels während einer Verschiebung der Probenanordnung in die zumindest eine Richtung erzeugten Ausgangssignalen des Detektors in Abhängigkeit von der Verschiebung bestimmt werden.

Bezüglich Ausgestaltungen und Vorteilen des erfindungsgemäßen Mikroskops sei vollumfänglich auf die Ausführungen im Zusammenhang mit dem entsprechenden erfindungsgemäßen Verfahren verwiesen.

Vorteilhafterweise umfasst das Mikroskop einen Speicher, insbesondere in Form einer Datenbank, zur Abspeicherung von Abmessungen bekannter Probenanordnungen. Auch diesbezüglich sei auf die Ausführungen im Zusammenhang mit dem erfindungsgemäßen Verfahren verwiesen.

Vorteilhafterweise umfasst das erfindungsgemäße Mikroskop eine optische Auswerteeinrichtung zur Erzeugung und Auswertung von Helligkeits- und/oder Kontrastsignalen während der Verschiebung der Probenanordnung, insbesondere in Form einer Bilderzeugungseinrichtung zur Erzeugung mikroskopischer Bilder während der Verschiebung der Probenanordnung sowie einer Bildauswertungseinrichtung zur Auswertung von Helligkeits- und/oder Kontraständerungen der erzeugten Bilder. Auch bezüglich dieser Ausgestaltung sei auf die Ausführungen im Zusammenhang mit dem erfindungsgemäßen Verfahren verwiesen.

Mit Vorteil ist die Bestimmungseinrichtung des erfindungsgemäßen Mikroskops derart ausgebildet, dass den ermittelten Positionen auf der Probenanordnung bestimmte x-y-Koordinaten eines Mikroskoptisches zugeordnet werden, der die Verschiebeeinrichtung des Mikroskops bildet. Die Bestimmungseinrichtung ist weiterhin vorteilhafterweise derart ausgebildet, dass anhand der ermittelten Positionen ein Arbeitsbereich zur Probenuntersuchung festgelegt wird. Weiterhin kann mit Vorteil die Bestimmungseinrichtung derart ausgebildet sein, dass zur Festlegung des Arbeitsbereichs die Auswertung der aufgenommenen Signale der optischen Auswerteeinrichtung bzw. Bilder der Bilderzeugungseinrichtung hinsichtlich Helligkeits- und/oder Kontraständerungen herangezogen wird und/oder Abmessungen einer auf der Probenanordnung befindlichen Probe über die Auswertung der aufgenommenen Signale bzw. Bilder hinsichtlich Helligkeits- und/oder Kontraständerungen bestimmt werden.

Die Erfindung betrifft schließlich ein Computerprogramm mit Programmcode, bei dessen Ausführung auf einer einem erfindungsgemäßen Mikroskop zugeordneten Recheneinheit ein erfindungsgemäßes Verfahren durchgeführt wird. Weiterhin betrifft die Erfindung ein entsprechendes Computerprogrammprodukt mit einem darauf gespeicherten Computerprogramm mit Programmcode, bei dessen Ausführung auf einer einem erfindungsgemäßen Mikroskop zugeordneten Recheneinheit ein erfindungsgemäßes Verfahren durchgeführt wird. Das Computerprogramm kann als solches heruntergeladen oder hochgeladen werden oder auf einem Computerprogrammprodukt gespeichert oder zwischengespeichert sein. Als Computerprogrammprodukt kommen flüchtige oder nichtflüchtige Speichermedien, wie beispielsweise ein USB-Stick, RAM- oder ROM-Speicher bekannter Art, in Frage. Die genannte Recheneinheit kann die Steuereinrichtung des Mikroskops oder ein Teil dieser Steuereinrichtung sein. Die genannte Bestimmungseinrichtung des erfindungsgemäßen Mikroskops kann Bestandteil dieser Recheneinheit und/oder der genannten Steuereinrichtung sein.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Schutzbereich wird durch die Ansprüche definiert.

Die Erfindung ist anhand eines Ausführungsbeispiels in der Zeichnung schematisch dargestellt und wird im Folgenden unter Bezugnahme auf die Zeichnung beschrieben.

### Figurenbeschreibung

Figur 1 zeigt schematisch eine Ausführungsform eines erfindungsgemäßen Mikroskops,
Figur 2 zeigt das Ausgangssignal eines Detektors einer Autofokuseinrichtung eines erfindungsgemäßen Mikroskops bei Verschiebung einer Probenanordnung im Objektraum des Mikroskops in einer Richtung in einer möglichen Ausführungsform,
Figur 3 zeigt schematisch eine Möglichkeit zur Erzeugung einer Profilkarte für eine Probenanordnung und
Figur 4 zeigt schematisch eine Ausführungsform einer Probenanordnung mit einer Möglichkeit der Bestimmung eines möglichen Arbeitsbereichs.

Die Figuren werden übergreifend beschrieben. Gleiche Bezugszeichen bezeichnen gleiche oder gleichartige Elemente. Die Ausführungsform gemäß Figur 1 wurde bereits weiter oben zur Erläuterung des Aufbaus und der Funktionsweise einer triangulierenden Autofokuseinrichtung beschrieben, wobei nunmehr eine eine solche Autofokuseinrichtung verwendende vorteilhafte Ausführungsform der Erfindung näher erläutert werden soll. Die triangulierende Autofokuseinrichtung ist insgesamt mit 2 bezeichnet. Sie umfasst zumindest eine Autofokussierungslichtquelle 19 zur Erzeugung des Messstrahls 30, den Strahlteiler 20 zur Umlenkung des Messstrahls 30 in Richtung Objektebene 16 sowie einen Detektor 28, auf den der an der Objektebene 16 reflektierte Messstrahl 32 auftrifft. In der oben bereits erläuterten Art und Weise kann eine Verschiebung der Objektebene 16 nach 16' von dem Detektor 28 detektiert werden, da sich der reflektierte Messstrahl 32 in den reflektierten Messstrahl 32' verschiebt. Im Normalbetrieb eines Mikroskops 1 wird eine derartige Verschiebung der Objektebene dadurch kompensiert, dass die Autofokuseinrichtung 2 den Motor 27 ansteuert, der das Mikroskopobjektiv 10 in z-Richtung derart verschiebt, dass der Abstand zwischen Objektiv 10 und Objektebene unverändert bleibt. Alternativ oder zusätzlich kann bei einer Verschiebbarkeit der Objektebene 16 in z-Richtung, beispielsweise durch einen in z-Richtung verschiebbaren Mikroskoptisch, eine Verschiebung der Objektebene 16 in z-Richtung erfolgen.

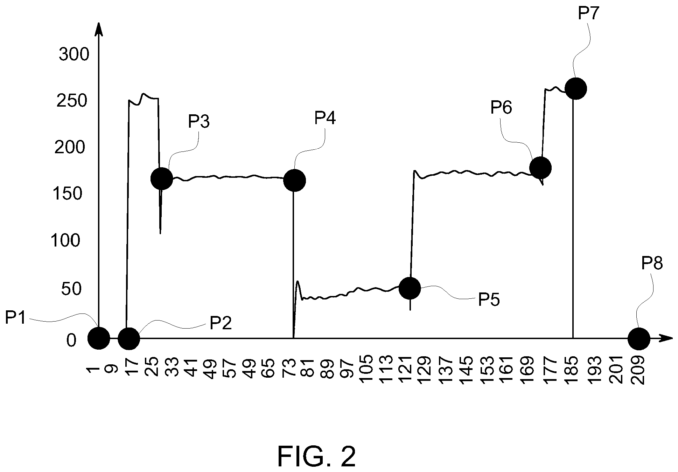

Das in Figur 1 dargestellte Mikroskop 1 weist neben diesen bereits erläuterten Elementen außerdem eine Verschiebeeinrichtung 3 zur Verschiebung einer auf der Objektebene 16 befindlichen Probenanordnung (in Figur 1 nicht dargestellt) in zumindest eine Richtung senkrecht zur optischen Achse 8 auf. Bei dieser Verschiebeeinrichtung 3 kann es sich um einen x-y-Mikroskoptisch handeln. Die x-y-Richtungen sind in Figur 1 entsprechend gekennzeichnet. Das Mikroskop 1 umfasst weiterhin eine Bestimmungseinrichtung 4 zur automatischen Ermittlung von Positionen, P1 bis P8 (vergleiche Figur 2), auf der Probenanordnung, wobei die Bestimmungseinrichtung 4 derart ausgebildet ist, dass diese Positionen mittels während einer Verschiebung der Probenanordnung in eine Richtung erzeugten Ausgangssignalen des Detektors 28 der Autofokuseinrichtung 2 bestimmt werden. Hierzu ist die Bestimmungseinrichtung 4 mit dem Detektor 28 zur Signalübertragung verbunden, wobei diese Verbindung mit Kabel oder kabellos erfolgen kann.

Die Bestimmung von Positionen auf der Probenanordnung erfolgt zweckmäßigerweise vor dem Beginn des Normalbetriebs des Mikroskops 1, insbesondere zur Festlegung eines geeigneten Arbeitsbereichs, also Probenbereichs zur Probenuntersuchung, für diesen Normalbetrieb. Die Bestimmung von Positionen auf der Probenanordnung erfolgt somit vor dem zweckbestimmten Betrieb der Autofokuseinrichtung 2 zur Einstellung bzw. zum Halten des Fokus. Während der automatischen Ermittlung von Positionen auf der Probenanordnung ist somit die Autofokuseinrichtung 2 nicht dazu ausgelegt, etwaige Verschiebungen des Autofokus-Messstrahls 30 in z-Richtung aufgrund der in einer Richtung abgetasteten Probenanordnung etwa durch motorische Verschiebung des Mikroskopobjektivs 10 zu kompensieren. Vielmehr werden die vom Detektor 28 der Autofokuseinrichtung 2 erzeugten Ausgangssignale zur automatischen Ermittlung markanter Positionen auf der vermessenen Probenanordnung verwendet. Dies sei unter Heranziehen der Figur 2 näher erläutert.

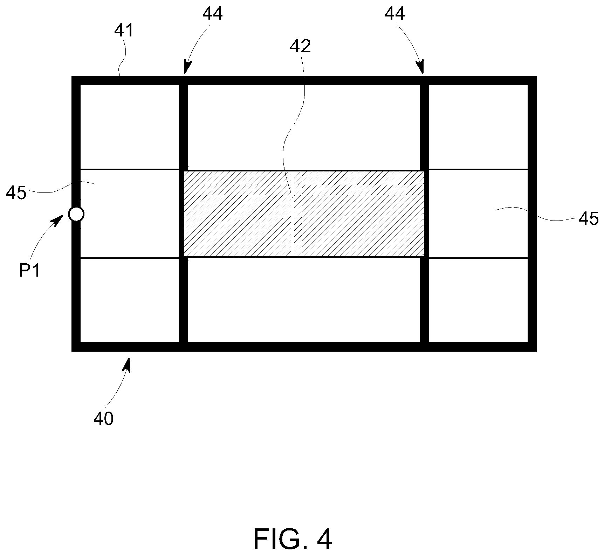

Figur 2 zeigt schematisch die bei Verschiebung einer Probenanordnung in eine Richtung erzeugten Ausgangssignale bzw. den zeitlichen Verlauf des Ausgangssignals des Detektors 28 der in Figur 1 gezeigten Autofokuseinrichtung 2. Beispielsweise wird der x-y-Mikroskoptisch 3 aus Figur 1 hierzu in x-Richtung entlang der langen Kante einer Probenanordnung (vgl. Figur 4) verfahren, während die Ausgangssignale der Autofokuseinrichtung 2 ausgewertet werden. In dem in Figur 2 dargestellten Beispiel umfasst die Probenanordnung einen Halterahmen, innerhalb dessen ein Objektträger fixiert ist, wobei auf dem Objektträger ein Deckglas aufgebracht ist. Zwischen Objektträger und Deckglas befindet sich üblicherweise die zu untersuchende Probe.

Solange sich zwischen Mikroskopobjektiv 10 und Objektebene 16 kein Objekt befindet, wird der Detektor 28 kein Signal ausgeben. Sobald bei weiterer Verschiebung der Probenanordnung die Kante des verstellbaren Halterahmens über das Objektiv 10 gefahren wird, empfängt der Detektor 28 ein Signal und gibt aufgrund der eingetretenen Höhen- und/oder Materialänderung ein entsprechendes Ausgangssignal aus (erste Flanke), wodurch die Position der Kante des Halterahmens bekannt ist. In Figur 2 bezeichnet P1 den Startpunkt der Verschiebung der Probenanordnung beispielsweise in x-Richtung und P2 die erste Kante des Halterahmens. P3 bezeichnet den Beginn des Objektträgers (zweite Flanke), der in dem dargestellten Fall eine abgeklebte Glasfläche aufweist. P4 bezeichnet den Beginn des Deckglases (dritte Flanke) und P5 dessen Ende (vierte Flanke). P6 bezeichnet den Endpunkt des Objektträgers und den Anfangspunkt des Halterahmens (fünfte Flanke). P7 bezeichnet den Endpunkt des Halterahmens (sechste und letzte Flanke), darüber hinaus gibt der Detektor 28 mangels Reflex des Messstrahls 30 kein Ausgangssignal. P8 bezeichnet schließlich das Ende des Verfahrbereichs. Die Positionen P1 bis P8 können zusammen mit den zugehörigen Tischkoordinaten gespeichert werden und als (eindimensionales) Profil der Probenanordnung interpretiert werden. Die Auswertung des Profils erlaubt Rückschlüsse auf Position aber auch Beschaffenheit der Probenanordnung, da die Beschaffenheit der Oberfläche der Probenanordnung sich auf die Signalstärke des reflektierten Messstrahls 32 und somit auch des Ausgangssignals des Detektors 28 auswirkt.

Wenn die Abszisse der Figur 2 in Tischkoordinaten angegeben bzw. umgerechnet wird, ergeben sich aus dem in Figur 2 gezeigten Profil die Lage des Halterahmens zwischen P2 und P7, die Lage des Objektträgers zwischen P3 und P6 sowie die Lage des Deckglases zwischen P4 und P5 in Tischkoordinaten. Der Arbeitsbereich für die anschließende mikroskopische Untersuchung kann nun auf den innersten Bereich zwischen P4 und P5 oder einen Unterbereich dieses Bereichs festgelegt werden. Anschließend erfolgt die mikroskopische Untersuchung innerhalb des festgelegten Arbeitsbereichs, wobei hierzu die Autofokuseinrichtung 2 ihrem ursprünglichen Verwendungszweck wieder zugeführt wird. Ist der Tisch auf dem Arbeitsbereich positioniert, erfolgt eine Fokuskorrektur in z-Richtung, hierzu wird mit der Autofokuseinrichtung 2 ein zuvor kalibrierter z-Wert eingeregelt, welcher im Fokusbereich des Mikroskops 1 liegt und anschließend um die Dicke des Deckglases korrigiert wird. Diese Vorgehensweise ist an sich bekannt. Bei dem Mikroskop 1 kann es sich um ein aufrechtes Mikroskop, wie in Figur 1 dargestellt, handeln oder aber um ein inverses Mikroskop. Letztere Mikroskope werden häufig zur Untersuchung dünner biologischer Proben eingesetzt.

Während der oben beschriebenen Ermittlung des Profils der Probenanordnung können in vorteilhafter Weise parallel Bilder über eine Bilderzeugungseinrichtung 5 des Mikroskops 1 aufgenommen werden, wie in Figur 1 schematisch dargestellt. Anstelle von Bildern kann es ausreichend sein, lediglich Helligkeits- und/oder Kontrastverläufe aufzunehmen. Eine Kamera 17 der Bilderzeugungseinrichtung 5 ist hier mit ihrer lichtsensitiven Detektorfläche in der Bildebene 14 des Mikroskops 1 schematisch angeordnet. Die erzeugten Bilder werden mittels einer Bildauswertungseinrichtung 6 insbesondere auf Helligkeitsänderungen untersucht. Die Änderungen können jeweils gegenüber dem vorhergehenden Bild oder gegen ein Vergleichsbild bestimmt werden. Liegt eine Helligkeitsänderung vor, wird diese Information zusätzlich mit der entsprechenden Tischposition und dem zugehörigen Wert des Ausgangssignals des Detektors 28 verknüpft. Bei dieser Vorgehensweise kann beispielsweise der Beginn einer Probe während der Verschiebung der Probenanordnung innerhalb des Bereichs des Deckglases, also beispielsweise innerhalb des Bereichs der Positionen P4 und P5 gemäß Figur 2, detektiert werden. In gleicher Weise kann das Ende der Probe innerhalb des Bereichs des Deckglases detektiert werden. Auf diese Weise erhält man die Abmessung der Probe in Verschieberichtung. Diese Information kann wiederum auf den festzulegenden Arbeitsbereich zur Probenuntersuchung angewendet werden.

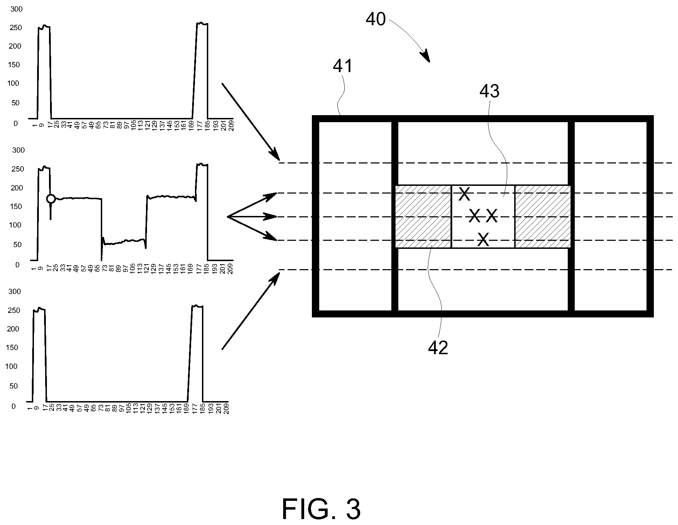

Figur 3 zeigt nun eine vorteilhafte Erweiterung zur Erstellung einer Profilkarte über die gesamte Probenanordnung bzw. über wesentliche Teile dieser Probenanordnung. Die Probenanordnung selbst ist mit 40 bezeichnet. Sie besteht in diesem Ausführungsbeispiel wiederum aus einer Halteeinrichtung bzw. einem Halterahmen 41, einem Probenträger bzw. Objektträger 42 und einem Deckglas 43. Zwischen Deckglas 43 und Objektträger 42 ist eine zu untersuchende Probe angeordnet. Interessierende Probenpunkte sind mit X bezeichnet (points of interest). Ohne Beschränkung der Allgemeinheit kann die lange Kante der Probenanordnung 40 als x-Richtung und die hierzu senkrechte kurze Kante der Probenanordnung 40 als y-Richtung definiert werden. An verschiedenen Stellen in y-Richtung aufgenommene Profile von Ausgangssignalen des Detektors 28 der Autofokuseinrichtung 2 sind in Figur 3 eingezeichnet. Innerhalb des Objektträgers 42 aufgenommene Profile entsprechen dem im Zusammenhang mit Figur 2 erläuterten Profil. Außerhalb dieses Bereichs aufgenommene Profile zeigen als Positionen lediglich Beginn und Ende des Halterahmens, entsprechend den Punkten P2 und P3 bzw. P6 und P7 aus Figur 2. Durch engmaschige Messung in y-Richtung kann man auf diese Weise eine zweidimensionale Profilkarte erhalten, aus der die Begrenzungspunkte des Deckglases 43 in beiden Richtungen (x, y) entnommen werden können. Der Arbeitsbereich für die spätere Untersuchung der Probe kann sich dann innerhalb dieser Begrenzungspunkte halten. Durch zusätzliche Bildaufnahme oder Aufnahme von Helligkeitsverläufen , wie oben beschrieben, kann auf diese Weise auch die Begrenzung der Probe ermittelt werden und der Arbeitsbereich für die spätere mikroskopische Untersuchung entsprechend festgelegt werden.

Figur 4 zeigt schließlich eine Ausführungsform einer Probenanordnung 40, wie sie zu den im Zusammenhang mit den Figuren 2 und 3 beschriebenen Profilen führt. Die Probenanordnung 40 umfasst wiederum einen Halterahmen 41 als Halteeinrichtung, einen Objektträger 42 als Probenträger und (hier nicht dargestellt) ein auf dem Objektträger 42 befindliches Deckglas. Die verstellbare Aufnahme des Halterahmens 41 ist mit 44 bezeichnet. Durch die verstellbare Aufnahme 44 kann eine Positionierung des Objektträgers 42 entlang der längeren Längsseite der Probenanordnung 40 erfolgen. Entsprechend gekennzeichnet sind mögliche Positionen 45 des Objektträgers 42.

Sind die Abmessungen der Probenanordnung 40 bekannt, können diese in einem Speicher oder besser in einer Datenbank abgelegt werden. Aus dieser Datenbank kann der Nutzer die Art der Halteeinrichtung 41 oder allgemeiner der Probenanordnung 40 auswählen, die er für die Aufnahme des Probenträgers 42 (Glasslide, Petrischale oder Wellplatte) verwendet. Die Datenbank liefert die Abmessungen und die festen Achsen der Probenanordnung 40. Durch diese Angaben kann die mögliche Position 45 des Objektträgers 42 bereits eingeschränkt werden. Der Mikroskoptisch kann dann in die Startposition P1 gefahren werden, welche sich in der Mitte der kleineren Kante des Objektträgers 42 und am linken Rand der längeren Kante des möglichen Positionsbereichs 45 befindet. Anschließend erfolgt die Messung, wie anhand von Figur 2 und/oder Figur 3 beschrieben. Nach Festlegung eines Arbeitsbereichs kann die eigentliche mikroskopische Untersuchung beginnen.

Die vorliegende Erfindung eignet sich in besonderer Art und Weise zur Definition eines Arbeitsbereichs, insbesondere wenn eine visuelle Bestimmung dieses Arbeitsbereichs nicht möglich oder zu umständlich ist.

### Bezugszeichenliste

- 1: Mikroskop
- 2: Autofokuseinrichtung
- 3: Verschiebeeinrichtung, x-y-Mikroskoptisch
- 4: Bestimmungseinrichtung
- 5: Bilderzeugungseinrichtung
- 6: Bildauswertungseinrichtung
- 8: optische Achse
- 10: Mikroskopobjektiv
- 12: Tubuslinse
- 14: Bildebene
- 16, 16': Objektebene
- 17: Kamera
- 19: Messstrahllichtquelle, Autofokussierungslichtquelle
- 20: Strahlteiler
- 27: Motor
- 28: Detektor, Autofokus-Detektor
- 30: Messstrahl, Autofokus-Messstrahl
- 32, 32': reflektierter Messstrahl
- 40: Probenanordnung
- 41: Halteeinrichtung, Halterahmen
- 42: Probenträger, Objektträger
- 43: Deckglas
- 44: verstellbare Aufnahme
- 45: mögliche Positionen
- A, B, B', C, D: Punkt
- x, y, z: Raumrichtung
- α: Winkel

## Patentansprüche

1. Verfahren zur automatischen Ermittlung mehrerer Positionen (P1 - P8) auf einer Probenanordnung (40) im Objektraum eines Mikroskops (1), welches ein Mikroskopobjektiv (10), das eine optische Achse (8) definiert, umfasst,
wobei ein Messstrahl (30) von einer Messstrahleinrichtung (19, 20) erzeugt und auf die Probenanordnung (40) gerichtet wird und ein von der Probenanordnung (40) reflektierter Messstrahl (32, 32') von einem Detektor (28) erfasst wird, der ein Ausgangssignal erzeugt,
wobei die Probenanordnung (40) in zumindest einer Richtung senkrecht zur optischen Achse (8) verschoben wird,
wobei in Abhängigkeit von der Verschiebung die mehreren Positionen (P1 - P8) auf der Probenanordnung entlang der zumindest einen Richtung senkrecht zur optischen Achse (8) mittels während der Verschiebung in die zumindest eine Richtung erzeugten Ausgangssignalen des Detektors (28) ermittelt werden,
und wobei eine triangulierende Autofokuseinrichtung (2) verwendet wird, wobei die Messstrahleinrichtung (19, 20) eine Autofokussierungslichtquelle (19) der triangulierenden Autofokuseinrichtung (2) umfasst und ein von dieser Autofokussierungslichtquelle (19) erzeugter Autofokus-Messstrahl als Messstrahl (30) und als Detektor (28) ein Autofokus-Detektor der triangulierenden Autofokuseinrichtung (2) verwendet wird, und
wobei anhand der ermittelten Positionen (P1 - P8) auf der Probenanordnung (40) ein Probenbereich zur Probenuntersuchung festgelegt wird.

2. Verfahren nach Anspruch 1, wobei die von dem Detektor (28) erzeugten Ausgangssignale hinsichtlich vorhandener Signalflanken ausgewertet werden, um die mehreren Positionen (P1 - P8) auf der Probenanordnung (40) zu bestimmen.

3. Verfahren nach Anspruch 1 oder 2, wobei die mehreren Positionen (P1 - P8) durch Begrenzungspunkte von mindestens einem in der Probenanordnung (40) enthaltenem Element (41, 42, 43) definiert werden.

4. Verfahren nach Anspruch 3, wobei das mindestens eine in der Probenanordnung (40) enthaltene Element ausgewählt wird aus einer Gruppe umfassend: eine Halteeinrichtung (41) für einen Probenträger, ein Probenträger (42), ein Deckglas (43), eine Probe.

5. Verfahren nach einem der Ansprüche 1 bis 4, wobei zur Verschiebung der Probenanordnung (40) in zumindest eine Richtung ein x-y-Mikroskoptisch (3) des Mikroskops (1) in x- und/oder y-Richtung bewegt wird.

6. Verfahren nach Anspruch 5, wobei die ermittelten Positionen (P1 - P8) auf der Probenanordnung (40) bestimmten x-y-Koordinaten des Mikroskoptisches (3) zugeordnet werden.

7. Verfahren nach einem der Ansprüche 1 bis 6, wobei die Anzahl von zur Festlegung des Probenbereichs zu ermittelnden Positionen (P1 - P8) bei einer bekannten Probenanordnung (40) dadurch reduziert wird, dass vorab gespeicherte Abmessungen der bekannten Probenanordnung (40) berücksichtigt werden.

8. Verfahren nach einem der Ansprüche 1 bis 7, wobei mittels einer optischen Auswerteeinrichtung (5, 6) des Mikroskops (1) während der Verschiebung der Probenanordnung (40) Helligkeits- und/oder Kontrastsignale erzeugt und diese ausgewertet werden, wobei insbesondere während der Verschiebung der Probenanordnung (40) mittels einer elektronischen Bilderzeugungseinrichtung (5) des Mikroskops (1) mikroskopische Bilder aufgenommen und diese mittels einer Bildauswerteeinrichtung (6) des Mikroskops (1) hinsichtlich Helligkeits- und/oder Kontraständerungen ausgewertet werden.

9. Verfahren nach einem der vorangehenden Ansprüche, wobei aus den im Laufe der Verschiebung der Probenanordnung (40) in die zumindest eine Richtung erzeugten Ausgangssignalen des Detektors (28) ein Profil oder eine Profilkarte der Probenanordnung erstellt wird.

10. Verfahren nach einem der vorangehenden Ansprüche, wobei nach Ermittlung der mehreren Positionen (P1 - P8) zur Untersuchung eines Probenbereichs ein Fokusabstand zwischen Probenanordnung (40) und Mikroskopobjektiv (10) durch Auswertung der Ausgangssignale des Detektors (28) der Autofokuseinrichtung (2) eingestellt und/oder gehalten wird.

11. Mikroskop (1) mit
einem Mikroskopobjektiv (10), das eine optische Achse (8) definiert,
einer Messstrahleinrichtung (19, 20) zur Erzeugung eines auf eine Probenanordnung (40) gerichteten Messstrahls (30) und einem Detektor (28) zur Erfassung eines von der Probenanordnung (40) reflektierten Messstrahls (32, 32'), wobei der Detektor (28) ein Ausgangssignal erzeugt,
einer Verschiebeeinrichtung (3) zur Verschiebung der Probenanordnung (40) in zumindest eine Richtung senkrecht zur optischen Achse (8),
mit einer Bestimmungseinrichtung (4) zur automatischen Ermittlung mehrerer Positionen (P1 - P8) auf der Probenanordnung (40)
und mit einer triangulierenden Autofokuseinrichtung (2),
wobei die Bestimmungseinrichtung (4) derart ausgebildet ist, dass die mehreren Positionen (P1 - P8) auf der Probenanordnung entlang der zumindest einen Richtung senkrecht zur optischen Achse (8) mittels während einer Verschiebung der Probenanordnung in die zumindest eine Richtung erzeugten Ausgangssignalen des Detektors (28) in Abhängigkeit von der Verschiebung bestimmt werden,
und wobei die Messstrahleinrichtung (19, 20) eine Autofokussierungslichtquelle (19) der Autofokuseinrichtung (2) umfasst und ein von dieser Autofokussierungslichtquelle (19) erzeugter Autofokus-Messstrahl den Messstrahl (30) bildet und wobei der Detektor (28) einen Autofokus-Detektor der triangulierenden Autofokuseinrichtung (2) umfasst, und
wobei die Bestimmungseinrichtung (4) derart ausgebildet ist, dass anhand der ermittelten Positionen (P1 - P8) auf der Probenanordnung (40) ein Probenbereich zur Probenuntersuchung festgelegt wird.

12. Mikroskop (1) nach Anspruch 11, wobei die Bestimmungseinrichtung (4) derart ausgebildet ist, dass den ermittelten Positionen (P1 - P8) auf der Probenanordnung (40) bestimmte x-y-Koordinaten des Mikroskoptisches (3) zugeordnet werden.

13. Computerprogramm mit Programmcode, bei dessen Ausführung auf einer einem Mikroskop (1) gemäß einem der Ansprüche 11 bis 12 zugeordneten Recheneinheit ein Verfahren gemäß einem der Ansprüche 1 bis 10 ausgeführt wird.

14. Computerprogrammprodukt mit einem darauf gespeicherten Computerprogramm mit Programmcode, bei dessen Ausführung auf einer einem Mikroskop (1) gemäß einem der Ansprüche 11 bis 12 zugeordneten Recheneinheit ein Verfahren gemäß einem der Ansprüche 1 bis 10 ausgeführt wird.

## Claims

1. A method for automatically determining multiple positions (P1 - P8) on a sample arrangement (40) in the object space of a microscope (1), which comprises a microscope objective (10) defining an optical axis (8),
wherein a measuring beam (30) is generated by a measuring beam apparatus (19, 20) and is directed towards the sample arrangement (40) and a measuring beam (32, 32'), reflected from the sample arrangement (40), is detected by a detector (28) which generates an output signal,
wherein the sample arrangement (40) is displaced in at least one direction, perpendicular to the optical axis (8),
wherein, depending on the displacement, the multiple positions (P1 - P8) on the sample arrangement along the at least one direction, perpendicular to the optical axis (8), are determined by means of output signals of the detector (28), generated during the displacement in the at least one direction,
and wherein a triangulating autofocus apparatus (2) is used, wherein the measuring beam apparatus (19, 20) comprises an autofocusing light source (19) of the triangulating autofocus apparatus (2), and an autofocus measuring beam, generated by this autofocusing light source (19) is used as a measuring beam (30) and an autofocus detector of the triangulating autofocus apparatus (2) is used as a detector (28), and
wherein, based on the determined positions (P1 - P8) on the sample arrangement (40), a sample area for sample examination is defined.

2. The method according to claim 1, wherein the output signals, generated by the detector (28), are evaluated with respect to existing signal edges in order to determine the multiple positions (P1 - P8) on the sample arrangement (40).

3. The method according to claim 1 or 2, wherein the multiple positions (P1 - P8) are defined by boundary points of at least one element (41, 42, 43), contained in the sample arrangement (40).

4. The method according to claim 3, wherein the at least one element, included in the sample arrangement (40), is selected from a group, comprising: a holding apparatus (41) for a sample carrier, a sample carrier (42), a coverslip (43), a sample.

5. The method according to any one of claims 1 to 4, wherein, to move the sample arrangement (40) in at least one direction, an x-y-microscope stage (3) of the microscope (1) is moved in the x- and/or y-direction.

6. The method according to claim 5, wherein the determined positions (P1 - P8) on the sample arrangement (40) are assigned to specific x-y coordinates of the microscope stage (3).

7. The method according to any one of claims 1 to 6, wherein the number of positions (P1 - P8), to be determined for defining the sample area, is reduced in a known sample arrangement (40) by taking into account pre-stored dimensions of the known sample arrangement (40).

8. The method according to any one of claims 1 to 7, wherein brightness and/or contrast signals are generated and evaluated by means of an optical evaluation apparatus (5, 6) of the microscope (1) during the displacement of the sample arrangement (40), wherein, in particular, during the displacement of the sample arrangement (40), microscopic images are recorded by means of an electronic image generation apparatus (5) of the microscope (1) and these are evaluated with regard to changes in brightness and/or contrast by means of an image evaluation apparatus (6) of the microscope (1).

9. The method according to any one of the preceding claims, wherein a profile or profile map of the sample arrangement is created from the output signals of the detector (28), generated during the displacement of the sample arrangement (40) in at least one direction.

10. The method according to any one of the preceding claims, wherein, after determining the multiple positions (P1 - P8) for examining a sample area, a focus distance between sample arrangement (40) and microscope objective (10) is set and/or maintained by evaluating the output signals of the detector (28) of the autofocus apparatus (2).

11. A microscope (1) with
a microscope objective (10) that defines an optical axis (8),
a measuring beam apparatus (19, 20) for generating a measuring beam (30), directed towards a sample arrangement (40) and a detector (28), for detecting a measuring beam (32, 32'), reflected from the sample arrangement (40),
wherein the detector (28) generates an output signal,
a displacement apparatus (3) for displacing the sample arrangement (40) in at least one direction perpendicular to the optical axis (8),
with a determination apparatus (4) for automatically determining several positions (P1 - P8) on the sample arrangement (40)
and with a triangulating autofocus apparatus (2),
wherein the determination apparatus (4) is configured such that the multiple positions (P1 - P8) on the sample arrangement along the at least one direction, perpendicular to the optical axis (8), are determined by means of output signals of the detector (28), generated during a displacement of the sample arrangement in the at least one direction as a function of the displacement,
and wherein the measuring beam apparatus (19, 20) comprises an autofocusing light source (19) of the autofocus apparatus (2) and an autofocus measuring beam, generated by this autofocusing light source (19) forms the measuring beam (30) and wherein the detector (28) comprises an autofocus detector of the triangulating autofocus apparatus (2), and
wherein the determination apparatus (4) is configured such that a sample area for sample examination is defined on the basis of the determined positions (P1 - P8) on the sample arrangement (40).

12. The microscope (1) according to claim 11, wherein the determination apparatus (4) is configured such that the determined positions (P1 - P8) on the sample arrangement (40) are assigned certain x-y-coordinates of the microscope stage (3).

13. Computer program with program code, the execution of which on a computing unit, associated with a microscope (1) according to one of claims 11 to 12, executes a method according to any one of claims 1 to 10.

14. Computer program product, comprising a computer program with program code stored thereon, the execution of which on a computing unit, associated with a microscope (1) according to any one of claims 11 to 12, executes a method according to any one of claims 1 to 10.

## Revendications

1. Procédé de détermination automatique de plusieurs positions (P1 - P8) sur un agencement (40) d'échantillons dans l'espace objet d'un microscope (1), lequel comprend un objectif (10) de microscope qui définit un axe optique (8),
dans lequel un faisceau de mesure (30) est généré par un dispositif (19, 20) de faisceau de mesure et dirigé vers l'agencement (40) d'échantillons et un faisceau de mesure (32, 32') réfléchi par l'agencement (40) d'échantillons est détecté par un détecteur (28) qui génère un signal de sortie,
dans lequel l'agencement (40) d'échantillons est déplacé dans au moins une direction perpendiculaire à l'axe optique (8),
dans lequel en fonction du déplacement les plusieurs positions (P1 - P8) sur l'agencement d'échantillons le long de l'au moins une direction perpendiculaire à l'axe optique (8) sont déterminées à l'aide des signaux de sortie du détecteur (28) générés pendant le déplacement dans l'au moins une direction,
et dans lequel un dispositif d'autofocus (2) triangulant est utilisé, dans lequel le dispositif (19, 20) de faisceau de mesure comprend une source de lumière (19) d'autofocalisation du dispositif d'autofocus (2) triangulant et un faisceau de mesure d'autofocus généré par cette source de lumière (19) d'autofocalisation est utilisé comme faisceau de mesure (30) et un détecteur d'autofocus du dispositif d'autofocus (2) triangulant comme détecteur (28), et
dans lequel une zone d'échantillon est définie pour l'examen des échantillons sur la base des positions (P1 - P8) déterminées sur l'agencement (40) d'échantillons.

2. Procédé selon la revendication 1, dans lequel les signaux de sortie générés par le détecteur (28) sont analysés en ce qui concerne les flancs de signal présents afin de déterminer les plusieurs positions (P1 - P8) sur l'agencement (40) d'échantillons.

3. Procédé selon la revendication 1 ou la revendication 2, dans lequel les plusieurs positions (P1 - P8) sont définies par des points de limite d'au moins un élément (41, 42, 43) contenu dans l'agencement (40) d'échantillons.

4. Procédé selon la revendication 3, dans lequel l'au moins un élément contenu dans l'agencement (40) d'échantillons est sélectionné dans un groupe comprenant : un dispositif de maintien (41) pour un porte-échantillons, un porte-échantillons (42), une lamelle (43), un échantillon.

5. Procédé selon l'une quelconque des revendications 1 à 4, dans lequel une table (3) de microscope x-y du microscope (1) est mobile dans la direction x et/ou y pour déplacer l'agencement (40) d'échantillons dans au moins une direction.

6. Procédé selon la revendication 5, dans lequel les positions (P1 - P8) déterminées sur l'agencement (40) d'échantillons sont attribuées à certaines coordonnées x-y de la table (3) de microscope.

7. Procédé selon l'une quelconque des revendications 1 à 6, dans lequel le nombre de positions (P1 - P8) à déterminer pour fixer la zone d'échantillons pour un agencement (40) d'échantillons connu est réduit en tenant compte des dimensions préalablement enregistrées de l'agencement (40) d'échantillons connu.

8. Procédé selon l'une quelconque des revendications 1 à 7, dans lequel des signaux de luminosité et/ou de contraste sont générés et analysés à l'aide d'un dispositif d'analyse optique (5, 6) du microscope (1) pendant le déplacement de l'agencement (40) d'échantillons, dans lequel des images microscopiques sont capturées à l'aide d'un dispositif électronique (5) de génération d'images du microscope (1) en particulier pendant le déplacement de l'agencement (40) d'échantillons et celles-ci sont analysées à l'aide d'un dispositif d'analyse d'images (6) du microscope (1) en ce qui concerne les variations de luminosité et/ou de contraste.

9. Procédé selon l'une quelconque des revendications précédentes, dans lequel un profil ou une carte de profil de l'agencement d'échantillons est élaboré à partir des signaux de sortie du détecteur (28) générés lors du déplacement de l'agencement (40) d'échantillons dans l'au moins une direction.

10. Procédé selon l'une quelconque des revendications précédentes, dans lequel, après détermination des plusieurs positions (P1 - P8) pour l'examen d'une zone d'échantillon, une distance focale est réglée et/ou maintenue entre l'agencement (40) d'échantillons et l'objectif (10) de microscope par analyse des signaux de sortie du détecteur (28) du dispositif d'autofocus (2).

11. Microscope (1) avec
un objectif (10) de microscope qui définit un axe optique (8),
un dispositif (19, 20) de faisceau de mesure pour générer un faisceau de mesure (30) dirigé sur un agencement (40) d'échantillons et un détecteur (28) pour détecter un faisceau de mesure (32, 32') réfléchi par l'agencement (40) d'échantillons,
dans lequel le détecteur (28) génère un signal de sortie,
un dispositif de déplacement (3) pour déplacer l'agencement (40) d'échantillons dans au moins une direction perpendiculaire à l'axe optique (8),
avec un dispositif de détermination (4) pour déterminer automatiquement plusieurs positions (P1 - P8) sur l'agencement (40) d'échantillons
et avec un dispositif d'autofocus (2) triangulant,
dans lequel le dispositif de détermination (4) est configuré de sorte que les plusieurs positions (P1 - P8) sur l'agencement d'échantillons le long de l'au moins une direction perpendiculaire à l'axe optique (8) sont déterminées à l'aide de signaux de sortie du détecteur (28) générés pendant un déplacement de l'agencement d'échantillons dans l'au moins une direction en fonction du déplacement,
et dans lequel le dispositif (19, 20) de faisceau de mesure comprend une source de lumière (19) d'autofocalisation du dispositif d'autofocus (2) et un faisceau de mesure d'autofocus généré par cette source de lumière (19) d'autofocalisation forme le faisceau de mesure (30) et dans lequel le détecteur (28) comprend un détecteur d'autofocus du dispositif d'autofocus (2) triangulant, et
dans lequel le dispositif de détermination (4) est configuré de sorte qu'une zone d'échantillon pour l'examen des échantillons soit fixée sur la base des positions (P1 - P8) déterminées sur l'agencement (40) d'échantillons.

12. Microscope (1) selon la revendication 11, dans lequel le dispositif de détermination (4) est configuré de sorte que certaines coordonnées x-y de la table (3) de microscope sur l'agencement (40) d'échantillons sont attribuées aux positions (P1 - P8) déterminées.

13. Programme informatique avec un code de programme, lors de l'exécution duquel sur une unité de calcul associée à un microscope (1) selon l'une quelconque des revendications 11 et 12, est mis en œuvre un procédé selon l'une quelconque des revendications 1 à 10.

14. Produit-programme informatique avec un programme informatique avec un code de programme enregistré sur celui-ci, lors de l'exécution duquel sur une unité de calcul associée à un microscope (1) selon l'une quelconque des revendications 11 et 12 est mis en œuvre un procédé selon l'une quelconque des revendications 1 à 10.
